**Europäisches Patentamt**

**European Patent Office**

(19)

**Office européen des brevets**

(11) Veröffentlichungsnummer: **0 088 373**
**B1**

(12) **EUROPÄISCHE PATENTSCHRIFT**

(45) Veröffentlichungstag der Patentschrift:
**10.12.86**

(51) Int. Cl.⁴: **B 42 C 9/02**, C 09 J 7/02

(21) Anmeldenummer: **83102077.1**

(22) Anmeldetag: **03.03.83**

(54) **Papierblock und Verfahren zu seiner Herstellung.**

(30) Priorität: **05.03.82 DE 3207885**

(43) Veröffentlichungstag der Anmeldung:
**14.09.83 Patentblatt 83/37**

(45) Bekanntmachung des Hinweises auf die Patenterteilung:
**10.12.86 Patentblatt 86/50**

(84) Benannte Vertragsstaaten:
**DE**

(56) Entgegenhaltungen:
**CH - A - 459 955**
**DE - C - 700 843**
**DE - C - 713 077**
**FR - A - 894 111**
**FR - A - 922 286**
**FR - A - 977 516**
**FR - A - 2 378 840**
**FR - A - 2 387 274**
**US - A - 3 930 082**

(73) Patentinhaber: **HOECHST AKTIENGESELLSCHAFT,**
**Postfach 80 03 20, D-6230 Frankfurt am Main 80 (DE)**

(72) Erfinder: **Homanner, Alfons, Kronberger Weg 32,**
**D-6231 Sulzbach (DE)**
Erfinder: **Zimmermann, Wolfgang, Dr., Im Stückes 48,**
**D-6233 Kelkheim Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Papierblock, der aus Einzelblättern oder gehefteten Blattlagen besteht, die über eine Folie an einer Kante miteinander verbunden sind, und ein Verfahren zu seiner Herstellung.

Es ist einerseits bekannt, dass die einzelnen Seiten eines Buches durch eine Klebebindung am Buchrücken zusammengehalten werden, die ausschliesslich aus Klebstoff besteht, wobei als Klebstoffe sowohl Schmelzkleber als auch Dispersionsklebstoffe eingesetzt werden, die nach Trocknung am Buchrücken einen zusammenhängenden Film bilden sollen (vgl. Deutscher Drucker Nr. 19/1980, Seiten 18–24). Dabei ist die Haltbarkeit und Alterungsbeständigkeit der Klebebindung nicht nur vom Klebstoff, sondern auch von der Papiersorte und dem Grad der Bedruckung abhängig. Als Klebemittel dienen insbesondere zähplastische und witterungsunempfindliche Klebstoffe auf der Grundlage von Celluloseabkömmlingen oder von Kunstharzen wie Vinylprodukten, z. B. Polyvinylacetat, die nach dem Auftragen auf den Buchrücken einen zusammenhängenden, geschmeidigen, festen und wasserbeständigen Film bilden (vgl. deutsche Patentschrift 700 843). Die filmartige Verstärkungsschicht kann auch mit Hilfe von wässrigen Kunstharzdispersionen erzeugt werden, z. B. mit einer Dispersion von Polyglycerinacetat und Polyvinylacetat (vgl. deutsche Patentschrift 713 077). Die bekannten Klebstoffe sind offenbar nicht ohne weiteres universell einsatzfähig. Schmelzkleber haben nämlich den Nachteil, dass der Buchrücken oft nur unzureichend benetzt wird und Kälte- und Wärmestandfestigkeit unbefriedigend sind, und Dispersionsklebstoffe, die in der Regel einen Feststoffgehalt von höchstens 60 Gewichtsprozent aufweisen, benötigen zum Trocknen und zur Filmbildung lange Zeit, die nur durch Einsatz aufwendiger Hilfsmittel und -methoden verkürzt werden kann. Dieser Stand der Technik hat ausserdem den Nachteil, dass sich der Buchrücken beim Altpapier-Recycling-Prozess nicht im Wasser auflöst, so dass der Buchrücken vorher abgeschnitten werden muss.

Ferner sind aus der US-A-3 930 082 Papierblöcke bekannt, deren Einzelblätter an einer Randkante mittels Klebstoff mit einer wasserunlöslichen Kunststoffolie verklebt sind. In dieser Patentschrift ist das Problem des Altpapier-Recyclings nicht angesprochen.

Demgegenüber besteht die Aufgabe der Erfindung darin, einen Papierblock unter Verwendung einer Kunststoffolie als Buchrücken zu schaffen, der unter Vermeidung der obengenannten Nachteile voll recyclingfähig ist, d. h. bei dem die Rückstände des Buchrückens die Papieraufbereitung in Wasser nicht stören.

Ausgehend von einem solchen Papierblock, bestehend aus Einzelblättern oder gehefteten Blattlagen, die an einer Randkante mittels Klebstoff mit einer Kunststoffolie verbunden sind, wird diese Aufgabe dadurch gelöst, dass die Folie aus Polyvinylalkohol (PVAL) besteht. Da eine solche Folie wasserlöslich ist und die Verwendung einer Kunststoffolie als Buchrücken an sich die Menge des zu verwendenden Klebstoffes wesentlich reduziert, stört dieser Buchrücken den Recycling-Prozess nicht.

Gegenstand der Erfindung ist ferner ein Verfahren zur Herstellung eines an einer Seite zusammenhängenden Papierblocks durch Verkleben der den Papierblock bildenden Einzelblätter oder gehefteten Blattlagen, wobei man die Einzelblätter oder Blattlagen des Papierblocks an einer Kante durch Aufbringen eines Klebstoffs und einer Folie miteinander verbindet. Das Verfahren nach der Erfindung ist dadurch gekennzeichnet, dass man als Folie eine Folie aus Polyvinylalkohol verwendet.

Der erfindungsgemässe Papierblock verfügt über eine gute Kälte- und Wärmebeständigkeit, d. h. die Folie ist flexibel im Temperaturbereich von −20 bis 80 °C. Eine unerwünschte Weichmacherwanderung wird durch die PVAL-Folie verhindert.

Nach dem erfindungsgemässen Verfahren, das eine besondere Art der Klebebindung darstellt, lassen sich insbesondere Abreissblöcke und Notizblöcke sowie Bücher wie Taschenbücher und Telefonbücher herstellen. Solche Papierblöcke können in einfacher Weise im «Recycling»-Verfahren wieder verwertet werden, da die PVAL-Folie leicht in heissem Wasser auflösbar ist und eine mechanische Entfernung der Buchrücken unnötig ist. Von besonderem Vorteil ist die im Vergleich zur Verwendung von Dispersionsklebstoffen stark verkürzte Trocknungszeit, die höchstens 10 Sekunden beträgt.

Die Dicke der Folie beträgt vorzugsweise 0,01 bis 0,5 mm und insbesondere 0,02 bis 0,2 mm.

Die Folie besteht aus einem weichmacherhaltigen Polyvinylalkohol (PVAL), der eine Esterzahl von vorzugsweise 0 bis 200 mg KOH/g und dessen 4-gewichtsprozentige wässrige Lösung bei einer Temperatur von 20 °C eine Viskosität von vorzugsweise 4 bis 100 mPA · s aufweist. Besonders geeignet ist ein Polyvinylalkohol mit einer Esterzahl von 10 bis 150 mg KOH/g, dessen 4-gewichtsprozentige wässrige Lösung bei einer Temperatur von 20 °C eine Viskosität von 10 bis 60 mPa · s aufweist.

Als Ausgangsmaterial zur Herstellung der Folie dient insbesondere ein weichmacherhaltiges PVAL-Granulat; dieses besteht zu mindestens 70 Gewichtsprozent, vorzugsweise mindestens 90 Gewichtsprozent, aus Partikeln mit einem Durchmesser von 0,8 bis 4 mm, in denen ein Weichmacher und gegebenenfalls eine feinteilige, in Wasser lösliche oder dispergierbare, hochmolekulare organische Verbindung homogen verteilt vorliegen. Dieses Granulat wird in bekannter Weise dadurch hergestellt, dass 100 Gewichtsteile eines trockenen PVAL-Granulats, das zu mindestens 70 Gewichtsprozent aus Partikeln mit einem Durchmesser von 0,4 bis 4 mm besteht, mit 5 bis 50 Gewichtsteilen eines Weichmachers – gegebenenfalls in Gegenwart von 1 bis 15 Gewichtsteilen einer feinteiligen, in Wasser löslichen oder dispergierbaren, hochmolekularen organischen Verbindung, die aus Partikeln mit Durchmessern von höchstens 0,3 mm besteht – in Gegenwart einer solchen Menge Wasser, die unter Normalbedingungen zur Lösung des PVAL nicht ausreicht, intensiv und homogen miteinander vermischt werden; während des Mischvorganges wird die Temperatur des Gemisches derart erhöht und wieder gesenkt, dass die PVAL-Partikel quellen und vorübergehend agglomerisieren (vgl. europäische Anmeldungsveröffentlichung Nr. 4587).

Die erfindungsgemäss verwendete Folie wird durch übliche Verfahren hergestellt, insbesondere nach dem Giessverfahren, Breitschlitzextrusionsverfahren oder vorzugsweise Blasextrusionsverfahren. Im Bedarfsfall kann die Wasserlöslichkeit der Folie mechanisch oder chemisch modifiziert werden, insbesondere durch biaxiale Verstreckung oder durch partielle Vernetzung. Als Vernetzungsmittel dienen dabei Verbindungen, die mit den Hydroxylgruppen des PVAL reagieren. Insbesondere eignen sich bifunktionelle Verbindungen wie Bisepoxide und Diisocyanate sowie vorzugsweise Formaldehyd oder Formaldehyd abspaltende Verbindungen und auch Dialdehyde, z.B. Glyoxal oder Terephthalaldehyd.

Im Rahmen der Erfindung ist eine PVAL-Folie, die in kaltem Wasser unlöslich, aber in heissem Wasser löslich ist, besonders geeignet. Hierbei wird unter «kalt» eine Temperatur von höchstens 30 °C und unter «heiss» eine Temperatur von mindestens 50 °C verstanden.

Als Klebstoff wird vorzugsweise ein Dispersionsklebstoff verwendet, d.h. eine wässrige Kunststoff-Dispersion mit einem Feststoffgehalt von 40 bis 65, vorzugsweise 50 bis 60 Gewichtsprozent. Als Kunststoff-Dispersion eignen sich beispielsweise handelsübliche Dispersionen von Styrol/Acrylsäureester-Copolymeren sowie insbesondere Dispersionen auf Basis von Polyvinylacetat oder auf Basis von Vinylacetat-Copolymeren; z.B. Copolymeren des Vinylacetates mit Ethylen, Acrylsäureestern, Maleinsäurediestern oder höheren Vinylestern wie Vinyldecanaten und Terpolymeren aus Vinylacetat, Ethylen und Vinylchlorid. Die Teilchengrösse (durchschnittlicher Durchmesser) der dispergierten Polymerpartikel liegt im allgemeinen im Bereich von 0,01 bis 5 µm, vorzugsweise von 0,2 bis 3 µm, d.h. die Kunststoffdispersion ist grobdispers bis mitteldispers. Die Kunststoff-Dispersion enthält gegebenenfalls einen üblichen Weichmacher, insbesondere einen Phthalsäurediester wie Dibutylphthalat oder Benzylbutylphthalat.

Andere geeignete Klebstoffe sind Glutinleime, z.B. Knochenleim, und wässrigePolyvinylalkohol-Lösungen, deren PVAL-Gehalt 5 bis 35, vorzugsweise 10 bis 25 Gewichtsprozent beträgt. Der hier eingesetzte PVAL hat eine Esterzahl von 4 bis 190, vorzugsweise 20 bis 140 mg KOH/g, und die 4-gewichtsprozentige wässrige Lösung des PVAL hat bei einer Temperatur von 20 °C eine Viskosität von 2,6 bis 66, vorzugsweise 18 bis 28 mPa · s.

Der Klebstoff wird üblicherweise mit Hilfe einer Rolle oder Walze gleichmässig auf eine Seite eines aus Einzelblättern oder vorher gehefteten Blattlagen bestehenden Papierblocks aufgetragen. Der Papierblock ist dabei mechanisch fixiert, z.B. mit Hilfe einer Klammer. Die aufgetragene Klebstoffmenge beträgt 30 bis 200, vorzugsweise 50 bis 100 g/m². Auf die noch feuchte Klebstoffschicht wird dann die PVAL-Folie aufgebracht und vorzugsweise mit einer Andruckvorrichtung, z.B. einer Druckwalze oder einem Druckbalken, angedrückt; dabei beträgt der Druck auf die Folie 1 bis 8, vorzugsweise 2 bis 4 bar. Zur Beschleunigung der Verklebung empfiehlt es sich, die Andruckvorrichtung zu beheizen, und zwar auf eine Temperatur von 50 bis 150 °C, vorzugsweise 70 bis 90 °C.

Der erfindungsgemässe Papierblock kann aus unbedrucktem oder bedrucktem, gestrichenem oder ungestrichenem Papier und auch Kunstdruckpapier bestehen.

Beispiel 1

Ein würfelförmiger Stapel von Schreibpapier, der von einer Klammer zusammengehalten wurde, wurde auf einer Seite mit einem handelsüblichen Polyvinylacetatleim in einer Menge von 70 g/m² mit Hilfe einer Leimrolle beschichtet. Auf die nasse Klebstoffschicht wurde eine Folie aus Polyvinylalkohol, der eine Esterzahl von 140 mg KOH/g und dessen 4-prozentige wässrige Lösung bei 20 °C eine Viskosität von 18 mPa · s aufwies, mit Hilfe einer auf 90 °C geheizten Druckplatte bei einem Druck von 2 bar gedrückt. Die Dicke der Folie, die in kaltem Wasser unlöslich war, betrug 0,045 mm, und die Andruckzeit 10 Sekunden. Der erhaltene Papierblock war als Notizpapierblock geeignet.

Beispiel 2

Ein Stapel aus vorsortierten Blättern eines Telefonbuches, der von einer Klammer zusammengehalten wurde, wurde auf der Rückseite mit einem handelsüblichen Polyvinylacetatleim in einer Menge von 75 g/m² mit Hilfe einer Leimrolle beschichtet. Auf die nasse Klebstoffschicht wurde eine Folie aus Polyvinylalkohol, der eine Esterzahl von 10 mg KOH/g und dessen 4-prozentige wässrige Lösung bei 20 °C eine Viskosität von 20 mPa · s aufwies, mit Hilfe einer auf 80 °C geheizten Druckplatte bei einem Druck von 2 bar gedrückt. Die Dicke der Folie, die in kaltem Wasser unlöslich war, betrug 0,06 mm, und die Andruckzeit 8 Sekunden.

Beispiel 3

Ein Stapel von Kunstdruckpapier, der von einer Klammer zusammengehalten wurde, wurde auf einer Seite mit einem handelsüblichen Leim auf der Basis eines Vinylacetat/Ethylen-Copolymers in einer Menge von 70 g/m² mit Hilfe einer Leimauftragsmaschine beschichtet. Auf die nasse Klebstoffschicht wurde eine Folie aus Polyvinylalkohol, der eine Esterzahl von 100 mg KOH/g und dessen 4prozentige wässrige Lösung bei 20 °C eine Viskosität von 30 mPa · s aufwies, mit Hilfe einer auf 80 °C geheizten Druckplatte bei einem Druck von 2 bar gedruckt. Die Dicke der Folie, die in kaltem Wasser unlöslich war, betrug 0,06 mm, und die Andruckzeit 5 Sekunden.

## Patentansprüche

1. Papierblock, bestehend aus Einzelblättern oder gehefteten Blattlagen, die an einer Randkante mittels Klebstoff mit einer Kunststoffolie verbunden sind, dadurch gekennzeichnet, dass die Folie aus Polyvinylalkohol besteht.

2. Papierblock nach Anspruch 1, dadurch gekennzeichnet, dass die Folie eine Dicke von 0,01 bis 0,5 mm aufweist.

3. Papierblock nach Anspruch 1, dadurch gekennzeichnet, dass der Polyvinylalkohol eine Esterzahl von 0 bis 200 mg KOH/g und die 4-gewichtsprozentige wässrige Lösung des Polyvinylalkohols bei einer Temperatur von 20 °C eine Viskosität von 4 bis 100 mPa · s aufweist.

4. Verfahren zur Herstellung eines an einer Seite zusammenhängenden Papierblocks durch Verkleben der den Papierblock bildenden Einzelblätter oder gehefteten Blattlagen, wobei man die Einzelblätter oder Blattlagen des Papierblocks an einer Kante durch Aufbringen eines Klebstoffs und einer Folie miteinander verbindet, dadurch gekennzeichnet, dass man als Folie eine Folie aus Polyvinylalkohol verwendet.

5. Verfahren nach Anspruch 4, dadurch gekennzeichnet, dass man eine Folie mit einer Dicke von 0,01 bis 0,5 mm verwendet.

6. Verfahren nach Anspruch 4, dadurch gekennzeichnet, dass man eine Folie aus Polyvinylalkohol verwendet, der eine Esterzahl von 0 bis 200 mg KOH/g und dessen 4-gewichtsprozentige wässrige Lösung bei einer Temperatur von 20 °C eine Viskosität von 4 bis 100 mPa · s aufweist.

7. Verfahren nach Anspruch 4, dadurch gekennzeichnet, dass man als Klebstoff eine wässrige Kunststoff-Dispersion verwendet.

8. Verfahren nach Anspruch 4, dadurch gekennzeichnet, dass man das Aufbringen der Folie mit Hilfe einer Andruckvorrichtung bei einer Temperatur von 50 bis 150 °C durchführt.

## Claims

1. Paper bloc consisting of individual sheets or of stitched paper layers, which are connected at one margin by a plastics sheet by means of an adhesive, wherein the sheet consists of polyvinyl alcohol.

2. Paper bloc according to claim 1, wherein the sheet has a thickness of from 0,01 to 0,5 mm.

3. Paper block according to claim 1, wherein the polyvinyl alcohol has an ester number of from 0 to 200 mg KOH/g and the 4% by weight aqueous solution of the polyvinyl alcohol has a viscosity of from 4 to 100 mPa · s at a temperature of 20 °C.

4. Process for preparing a paper bloc, which is coherent at one side, by glueing together the individual sheets or the stitched paper layers forming the paper bloc, the individual sheets or the stitched paper layers of the paper bloc being connected with one another at one side by the application of an adhesive and of a sheet, wherein there is used a sheet of polyvinyl alcohol.

5. The process according to claim 4, wherein there is used a sheet having a thickness of from 0,01 to 0,5 mm.

6. The process according to claim 4, wherein there is used a sheet of polyvinyl alcohol, whose ester number is of from 0 to 200 mg KOH/g and whose 4% by weight aqueous solution has a viscosity of from 4 to 100 mPa · s at a temperature of 20 °C.

7. The process according to claim 4, wherein there is used as an adhesive a plastics dispersion.

8. The process according to claim 4, wherein the sheet is applied by means of a proofing press at a temperature of from 50 to 150 °C.

## Revendications

1. Bloc de papier se composant de feuilles individuelles ou de cahiers cousus reliés sur un de leurs bords par une feuille de matière plastique, au moyen d'un adhésif, caractérisé en ce que la feuille est constituée d'alcool polyvinylique.

2. Bloc de papier selon la revendication 1, caractérisé en ce que la feuille a une épaisseur de 0,01 à 0,5 mm.

3. Bloc de papier selon la revendication 1, caractérisé en ce que l'alcool poylvinylique a un indice d'ester de 0 à 200 mg KOH/g et la solution aqueuse à 4% en poids de l'alcool polyvinylique a une viscosité de 4 à 100 mPa · s à une température de 20 °C.

4. Procédé de fabrication d'un bloc de papier étant cohérent à un de ses côtés, par encollage des feuilles individuelles ou des cahiers cousus formant le bloc de papier en reliant entre eux les feuilles individuelles ou les cahiers du bloc de papier à un de leurs bords par le dépôt d'un adhésif et d'une feuille, procédé caractérisé en ce que l'on utilise comme feuille une feuille en alcool polyvinylique.

5. Procédé selon la revendication 1, caractérisé en ce que l'on utilise une feuille d'une épaisseur de 0,01 à 0,5 mm.

6. Procédé selon la revendication 4, caractérisé en ce que l'on utilise une feuille en alcool polyvinylique ayant un indice d'ester de 0 à 200 mg de KOH/g et dont la solution aqueuse à 4% en poids a une viscosité de 4 à 100 mPa · s à une température de 20 °C.

7. Procédé selon la revendication 4, caractérisé en ce que l'on utilise comme adhésif une dispersion aqueuse de matière plastique.

8. Procédé selon la revendication 4, caractérisé en ce que l'on effectue le dépôt de la feuille au moyen d'un dispositif presseur à une température de 50 à 150 °C.